# EUROPEAN PATENT APPLICATION

(11) **EP 4 740 737 A1**
(43) Date of publication of application: **13.05.2026**
(21) Application number: 25213858.1
(22) Date of filing: 06.11.2025
(51) Int. Cl.: A21B 3/00, F24C 15/00

(54) **OVEN DEVICE FOR OBTAINING PANETTONE WITH A FLAT TOP DURING BAKING**

(30) Priority: 11.11.2024 IT 202400025377
(71) Applicant: Fabula S.r.l., 05100 Terni (IT)
(72) Inventor: CAMPISI, Federico, 05100 TERNI (IT); DE ANGELIS, Daniela, 05100 TERNI (IT); MALERBA, Giorgia, 05100 TERNI (IT)
(74) Representative: Baldi, Claudio

(57) **Abstract**

Oven device (D) for obtaining panettone or other similar baked products provided with a flat top, wherein said device is suitable for moving a lid (3) against the opening of a mold (4) filled with dough in order to prevent the dough from overflowing from the top of said mold during baking.

## Description

The present invention relates to an oven device for obtaining panettone or other similar baked goods with a flat top.

As it is well known, panettone, pandoro, and similar baked products are invariably provided with a rounded top, similar to a dome.

Whereas such a morphological configuration of panettone and similar baked products is justified by the desire to respect a traditional shape that many consumers are fond of, on the other hand it is a limitation for the modernization and characterization of the appearance of these products.

Otherwise said, when compared to each other, the panettone that are currently produced by different producers have very little originality to the point that even the most discerning consumers can only tell the difference in their origin by looking at the respective cardboard boxes and transparent protective bags because both the boxes and the bags are provided with graphics and brands designed to let consumers make an informed choice about the origin and quality of all the panettone available on the market.

Starting from such an observation, consideration was given to the marketing potential of producing panettone with an unconventional shape that allows them to be immediately recognized as unique among all the panettone that continue to reproduce the traditional shape.

In particular, it was considered that the morphological and visual characterization of an unconventional panettone may derive from the decision to replace the traditional dome-shaped top with a perfectly flat top.

In fact, a panettone with such a kind of structure would definitely look more compact and less slender than a panettone with a traditional configuration, making it instantly recognizable on the market when compared to all the other kinds of panettone.

In view of the above, the main purpose of the present invention is to devise a device that is capable of producing a panettone with a perfectly flat top wall during baking in an oven.

A further purpose of the present invention is to ensure that the device is mounted in the baking chamber of a traditional oven and operates perfectly, according to the cyclical modes that will be described below, without requiring an external supply of electrical or pneumatic energy, and exploiting the temperature variations that occur inside the oven during the heating and cooling steps that are typical of a baking process.

In any case, in order to better illustrate the peculiarities of the present invention, reference should be made to the methods that are currently used to bake a traditional panettone.

The dough of such a panettone is poured into molds that are essentially bucket-shaped, and therefore have no lid.

The rising of the dough during baking causes an increase in the volume of the dough such that part of the dough comes out of the opening of the respective mold to finally assume the dome-shaped top profile.

By virtue of the technology in question, once it is placed inside the baking chamber of a traditional oven, the innovative device is capable of moving a lid that abuts against the upper opening of an underlying panettone mold and remains in such a position for the entire baking process.

It is easy to understand that, as long as the lid is held in closing position, the provision of the lid prevents the dough loaded into the mold from rising freely out of the mold, and ensures that the dough is forced to suffer the interference of the flat inner surface of the lid, resulting in a panettone that can be defined as "flat-topped."

Once the baking process is completed and the oven is turned off, the device according to the invention automatically enables the raising of the lid and the consequent removal of the mold from the oven, in preparation for the final extraction of the product from the mold.

The main purpose of the present invention has been achieved in accordance with the characteristics listed in the attached independent claim 1.

Advantageous embodiments of the invention appear in the dependent claims.

For greater clarity, the description of the invention continues with reference to the attached drawings, which are for illustrative purposes only and are not limiting, wherein:
- Fig. 1 is an axonometric three-quarter view of the device in question;
- Fig. 2 is a section of Fig. 1 with plane A-A;
- Fig. 3 is the same as the previous one, except for it shows the device in question with the lid in raised position.

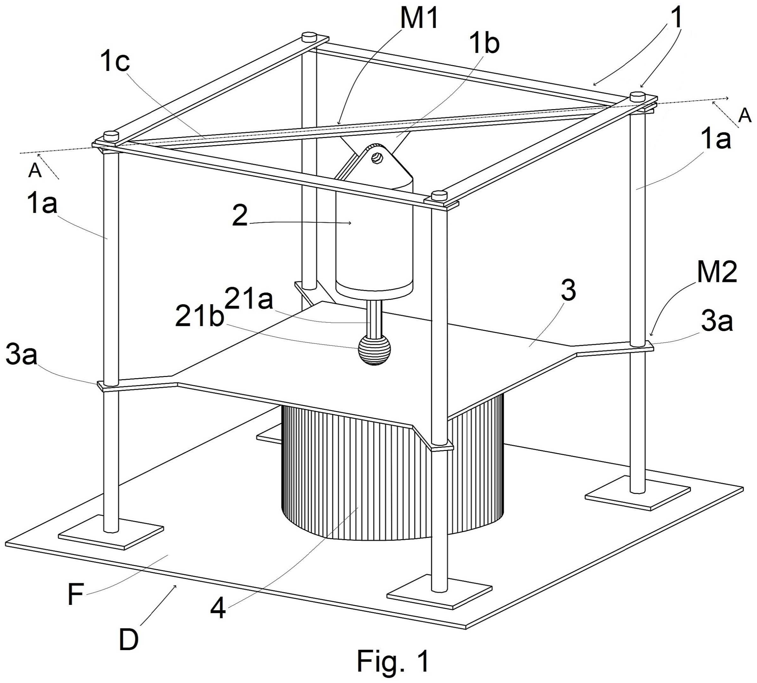

With reference to Fig. 1, the device according to the invention (D) comprises a supporting structure (1) from which an air piston (2) hangs vertically, said air piston (2) being suitable for enabling the alternate travels of a horizontal lid (3) with respect to an underlying mold (4) for panettone or similar baked products, so as to alternately move said lid (3) between an operating position, wherein it abuts against the upper opening (4a) of the mold (4), and an idle position, wherein it frees the upper opening (4a) of the mold (4).

In the preferred embodiment, the supporting structure (1) comprises two pairs of vertical rods (1a) between which a supporting means (M1) centrally operates to support the air piston (2) in vertical position.

Such a supporting means (M1) preferably consists of a plate (1b) that is disposed edgeways and protrudes at the center of the supporting structure (1), in correspondence with a crossbar (1c) or a horizontal wall supported by the vertical rods (1a).

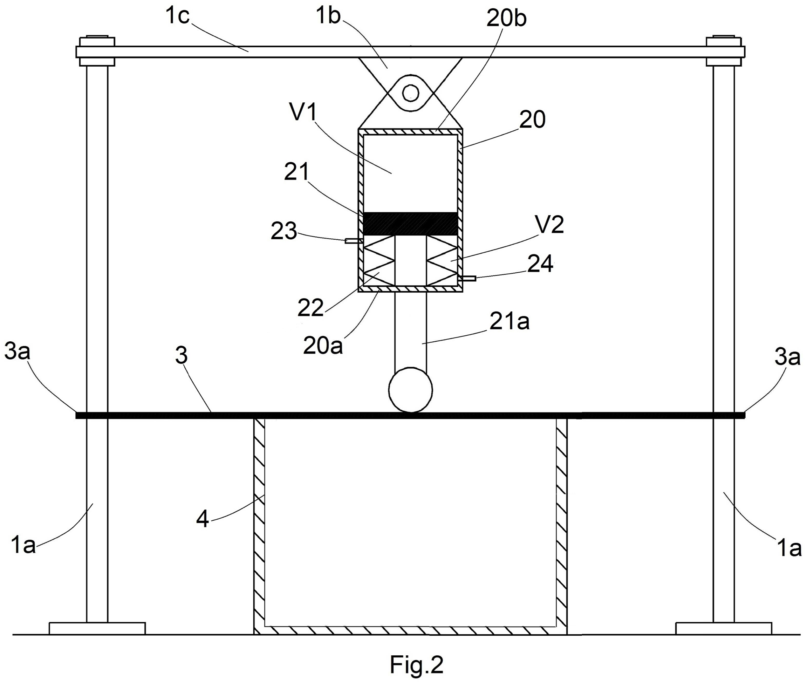

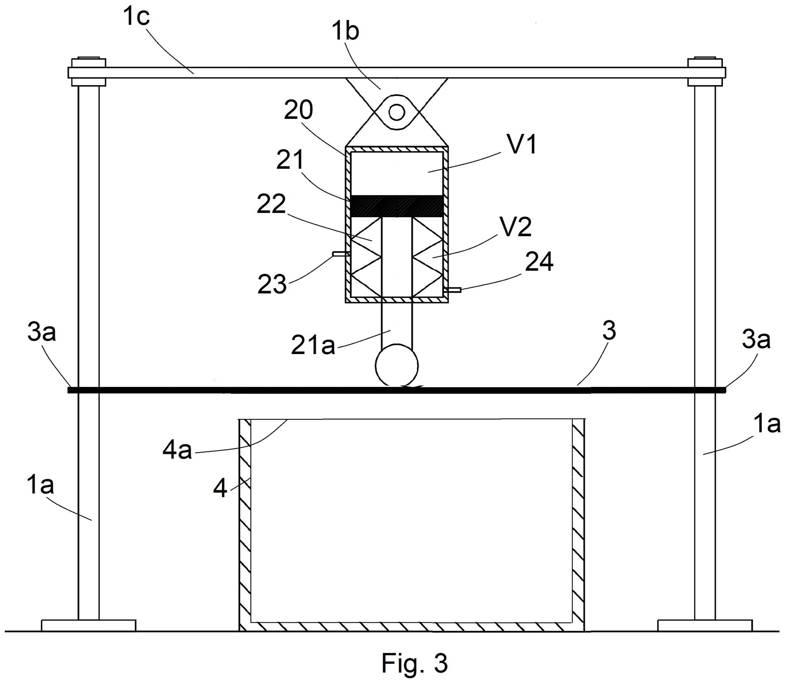

With reference to Figs. 2 and 3, the air piston (2) comprises a cylindrical liner (20) that is directly fixed to the plate (1b) and slidingly houses a plunger (21) associated with an underlying cylindrical stem (21a) inserted into the hole provided in the center of the lower wall (20a) of said liner (20); wherein said cylindrical stem (21a) supports the horizontal lid (3) at its spherical end (21b).

Suitable guiding means (M2) are provided to slidingly guide the alternate travels of said lid (3). In the preferred embodiment of the invention, said guiding means (M2) use the coupling between four perforated fins (3a) projecting from the corners of said lid (3) and the vertical rods (1a), in a condition in which said vertical rods (1a) are inserted into the holes of said fins (3a).

Alternatively, said guiding means (M2) may consist of an equal number of vertical columns, possibly supported on the inside of said vertical rods (1a) and inserted into corresponding through holes made in the structure of the lid (3).

It should be noted that the provision of the plunger (21) inside the liner (20) causes the formation of an upper compartment (V1) inside said liner (20) between the upper surface of the plunger (21) and the upper wall (20b) of the liner (20), and of a lower compartment (V2) between the lower surface of the plunger (21) and the lower wall (2a) of the liner (20); it being envisaged that the volume of said two compartments (V1, V2) is variable depending on the position assumed from time to time by the plunger (21) inside the liner (20) during its alternate travels.

A pair of cup springs (22) is housed inside the liner (20), at the height of the inner surface of the lower wall (20a), in a position in which said pair of cup springs (22) operates inside the lower compartment (V2) of said liner (20).

Whereas the upper compartment (V1) is sealed, a vent valve (23) and a vacuum breaker valve (24) are provided on the outer walls of said liner (20), at the height of the lower compartment (V2) and in communication with it.

The additional component of the device (D) according to the invention is a mold (4) provided with said upper opening (4a) that is suitable for being positioned under the lid (3) during use.

It should be reiterated that, due to the cooperation with the lid (3), the mold (4) can be alternately disposed in an open position, when the lid (3) is raised with respect to the opening (4a), as shown in Fig. 3, and in a perfectly closed position, when the lid (3) abuts against its upper opening (4a), as shown in Fig. 2.

Having described the structure of the new device (D) in question, this description continues by illustrating its practical operation during use.

Firstly, the device (D) is installed on the bottom of the cooking chamber of a traditional oven, in such a condition that the lid (3) is initially held in a raised or "idle" position by the air piston (2).

In particular, the lid (3) is held in idle position by the cup springs (22); it should be noted that, being suitably dimensioned according to the weight of the lid (3), said cup springs (22) prevent the plunger (21) of the air piston (2) from sliding downwards freely by gravity inside the liner (20) under the weight of the lid (3).

Successively, the mold (4) loaded with the dough that is necessary to produce a panettone or other similar baked product is inserted into the oven, in a position exactly under the lid (3) that is still held in raised position.

At this point, the oven is switched on and the temperature inside the respective cooking chamber is gradually increased.

Such a gradual temperature increase in the oven generates the heating and the consequent expansion of the air contained in the upper compartment (V1) of the liner (20); in such a condition, pressure is generated on the plunger (21) in up-down direction such as to overcome the resistance of the cup springs (22) and theoretically enable the integral gradual descent of the plunger (21), of the stem (21a), and of the lid (3).

In real terms, such a descent of the plunger (21) is only made possible by the provision of an additional indispensable technical device.

It should be noted that, in spite of being subject to the energetic downward thrust resulting from the expansion of the air contained in the upper compartment (V1), the plunger (21) would not be capable of descending inside the liner (20) due to the resistance offered by the air contained in the lower compartment (V2), which is in turn subject to the same expansion due to the temperature increase in the oven.

Such an impediment is overcome by the provision of the vent valve (23), that is located at the lower compartment (V2) of the liner (20) and causes the air that is expanding inside said lower compartment (V2) to flow out of the liner (20) towards the cooking chamber of the oven, without generating a resistance to the descent of the plunger (21) that is free to complete its downward travel.

Moreover, it should be noted that the up-down thrust exerted on the plunger (21) as a result of the expansion of the air in the upper compartment (V1) is also capable of overcoming the resistance of the cup springs (22).

In view of the above, the plunger (21) can effectively complete its downward travel together with the respective stem (21a), in such a way that the lid (3) hanging from said stem (21a) is moved to its lowered operating position, abutting against the upper opening (4a) of the mold (4).

Such a positioning of the lid (3) ensures that the dough contained in the mold (4) will not overflow from the mold (4) during its rising and final baking, but will be forced to increase in volume only up to the point of interference with the inner surface of the lid (3).

In view of the above, the panettone produced inside the device (D) will effectively have a perfectly flat upper surface once baking is complete.

Finally, it should be noted that the device (D) is automatically operated in a cyclical manner, after the baking of the dough loaded from time to time into the mold (4) is completed.

Once baking is finished, the oven is turned off and its internal temperature is reduced, in a condition in which the air contained inside the upper compartment (V1) tends to reduce its volume, decreasing the pressure previously exerted on the plunger (21).

In the same circumstance, the lower compartment (V2) of the liner (20) is still in an air vacuum condition, precisely because the air previously contained inside it was forcedly expelled through the vent valve (23).

However, in such a condition, the vacuum breaker valve (24) is spontaneously opened, allowing an airflow from outside the liner (20) into the lower compartment (V2), such to generate a pressure from down upwards on the plunger (21).

This causes the plunger (21) to rise inside the liner (20) and, at the same time, the lid (3) to be raised from the mold (4) by means of the respective stem (21a), returning the entire device (D) to its initial idle position.

At this point, the operator that is in charge of supervising the operation of the new device in question (D) can remove the mold (4) from the oven in order to extract the now completed "flat-topped" panettone and possibly place another mold loaded with new dough in position.

In view of the above considerations, it appears evident that the new device in question (D) is extremely effective, also considering its ability to operate cyclically without using an external electrical or pneumatic power supply, by simply exploiting the increase and decrease in the internal temperature of the oven.

Furthermore, the additional advantage provided by the device in question (D) is represented by the fact that it can be housed and operate perfectly inside a standard oven, without any need to modify or implement the structure of the oven itself.

Although a version of the device in question (D) suitable for being used with one mold (4) has been described, nothing prevents the same inventive idea from being implemented to create the device (D) in a version suitable for being simultaneously used with two or four molds loaded side by side on the surface of the oven, on the sole condition that the air piston (2) operates a lid (3) provided with such a surface area as to ensure the perfect simultaneous closure of the two or four molds during use.

The mold (4) comprised in the device according to the invention (D) may alternatively have a perfectly circular cross-section (when used for the production of panettone) or a star-shaped cross-section (when used for the production of pandoro).

Similarly, instead of being perfectly flat (as shown in the attached figures), the lower surface of the lid (3) may be provided with concave niches that extend beyond the upper surface of said lid (3), wherein a controlled and selective rising of the dough inserted into the mold (4) can be performed.

Such a feature would give a substantially flat upper surface to the panettone that is also characterized by the presence of bas-relief profiles with a decorative value.

## Claims

1. Device for installation in the cooking chamber of ovens used for baking panettone and the like, wherein said device (D) comprises:
- a supporting structure (1) comprising one or more pairs of vertical rods (1a) between which a plate (1b) disposed in vertical position is supported at the top by means of supporting means (M1);
- an air piston (2) comprising a cylindrical liner (20) that hangs vertically from said plate (1b); wherein said liner (20) extends between a horizontal lower wall (20a) and a horizontal upper wall (20b) and accommodates a plunger (21) inferiorly supporting a respective stem (21a) that protrudes from said liner (20) through a through hole formed on the horizontal lower wall (20a); wherein, in said liner (20), said plunger (21) generates the presence of an airtight upper compartment (V1) and of a lower compartment (V2), on whose walls a vent valve (23) and a vacuum breaker valve (24) are provided;
- a flat horizontal lid (3) mounted at the end of said stem (21a) of the air piston (2) and thus suitable for making alternate vertical travels in parallel direction;
- one or more cup springs (22) engaged in said liner (20) in said lower compartment (V2) and suitable for preventing the plunger (21) from sliding freely downward, inside the liner (20), under the weight of the lid (3) mounted on said stem (21a);
- at least one mold (4) for panettone or the like provided with an upper opening (4a) and disposed inferiorly to said lid (3), in a condition in which said mold (4) can be alternately disposed in a closing position, when said lid (3) is brought in contact against said upper opening (4a), and an opening position, as long as said lid (3) remains in a raised position with respect to said upper opening (4a) of the mold (4).

2. The device according to claim 1, wherein said supporting means (M1) for said plate (1b) comprise a crossbar (1c) supported by said vertical rods (1a, 1b).

3. The device according to claim 1, wherein said supporting means (M1) for said plate (1b) comprise a horizontal wall with continuous or grilled structure supported by said vertical rods (1a, 1b).

4. The device according to one of the preceding claims, wherein said device (D) comprises guiding means (M2) suitable for guiding the alternated vertical travels of the lid (3).

5. The device according to claim 4, wherein said guiding means (M2) comprise said vertical rods (1a) and corresponding perforated fins (3a) projecting on the perimeter of the lid (3), wherein said perforated fins (3a) are suitable for being slidingly mated with said vertical rods (1a).

6. The device according to claim 4, wherein said guiding means (M2) comprise two or more columns mounted on the inside of said vertical rods (1a) and respective holes provided in useful positions on the lid for slidingly accommodating said columns.

7. The device according to one of the preceding claims, wherein said lid (3) is provided at its lower flat surface with one or more recesses extending beyond the upper surface of said lid (3).

8. The device according to one of the preceding claims, wherein said device (D) comprises multiple molds (4) arranged in such a way as to suffer the simultaneous interference of said lid (3) when closed.

9. Oven (F) for baking panettone and the like comprising a device (D) according to the preceding claims that is disposed inside the cooking chamber.
